(19) 

Europäisches
Patentamt
European
Patent Office
Office européen
des brevets

(11) **EP 4 349 052 B1**

(12) **EUROPEAN PATENT SPECIFICATION**

(45) Date of publication and mention
of the grant of the patent:
**13.05.2026 Bulletin 2026/20**

(21) Application number: **21942362.1**

(22) Date of filing: **28.05.2021**

(51) International Patent Classification (IPC):
*H04W 12/06* (2021.01)      *H04W 12/63* (2021.01)
*H04W 12/71* (2021.01)      *H04W 4/80* (2018.01)
*G01S 5/06* (2006.01)       *H04K 3/00* (2006.01)
*G01S 5/12* (2006.01)

(52) Cooperative Patent Classification (CPC):
**H04W 12/71; H04K 3/22; H04W 4/80; H04W 12/06;
H04W 12/63;** G01S 5/12; H04K 2203/20

(86) International application number:
**PCT/CN2021/096653**

(87) International publication number:
**WO 2022/246786 (01.12.2022 Gazette 2022/48)**

(54) **DEVICE AUTHENTICATION IN BACKSCATTER COMMUNICATION SYSTEM**

VORRICHTUNGSAUTHENTIFIZIERUNG IN EINEM
RÜCKSTREUUNGSKOMMUNIKATIONSSYSTEM

AUTHENTIFICATION DE DISPOSITIF DANS UN SYSTÈME DE COMMUNICATION À
RÉTRODIFFUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.04.2024 Bulletin 2024/15**

(73) Proprietor: **Nokia Technologies Oy
02610 Espoo (FI)**

(72) Inventors:
• **WANG, Pu**
**Xi'an, Shaanxi 710071 (CN)**
• **YAN, Zheng**
**02180 Espoo (FI)**

(74) Representative: **Laine IP Oy
Porkkalankatu 24
00180 Helsinki (FI)**

(56) References cited:
**CN-A- 103 200 568        CN-A- 103 427 993
CN-A- 110 324 068        CN-A- 110 687 503
US-A1- 2019 214 855      US-A1- 2020 313 939**

• **HUANG ANNA HUANGANNA@SJTU EDU CN ET
AL: "Au-Id", PROCEEDINGS OF THE ACM ON
INTERACTIVE, MOBILE, WEARABLE AND
UBIQUITOUS TECHNOLOGIES, ACMPUB27,
NEW YORK, NY, USA, vol. 3, no. 2, 21 June 2019
(2019-06-21), pages 1 - 26, XP058485021, DOI:
10.1145/3328919**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure generally relates to wireless communication systems, and more specifically to methods and apparatuses for physical layer enhanced authentication and attacker tracing based on positioning with backscattered signals.

BACKGROUND

With the development of various wireless communication related technologies and the wide use of wireless devices, security and privacy have become critical issues. As an example, with the advance of low-power and miniature electronics, increasing Internet of Thing (IoT) devices have been applied in a wide range of application areas, such as civil infrastructure, wearable devices, and industrial or agriculture monitoring. This trend is unstoppable as we continue to automate processes in every aspect of our daily life. As most of the IoT devices are designed as small, they are expected to be powered by small on-device power supply, like various types and sizes of batteries. However, for large scale IoT deployments, the battery technology suffers from a number of major limitations, which poses a key design challenge for powering energy-constrained IoT devices. Because batteries store finite amounts of energy, they either need to be recharged or replaced, which is not only inconvenient and costly, but also not possible in certain applications. Thus, it is highly desirable to power IoT devices through energy harvest from ambient wireless signals, and to reduce the energy consumption of their wireless communication. Except for low-power and green communication technologies, security and privacy, especially device authentication in IoT systems is a critical issue needed to be addressed for secure communications among IoT devices.

Backscatter communication (BC), remarkable for its low production cost and low energy consumption, is an emerging radio technology for providing sustainable IoT systems. Radio frequency identification (RFID) is one category of BC systems and has been applied in a wide range of scenarios. In such systems, a reader issues radio frequency (RF) signals, which allows IoT devices to transmit data by backscattering and modulating the incident RF signals. At the same time, backscatter devices (BDs) can harvest energy from the RF signals to power their circuits. Compared to traditional radio architecture with power-hungry RF chains, BDs have no active RF components. As a result, it can be made to have miniature hardware with extremely low power consumption which facilitates large-scale deployment at flexible locations or in-body implantation. However, it is challenging for backscatter devices to employ complex cryptographic algorithms for secure communications and identity authentication, since they only possess finite energy supply and low computing capability. Without sufficient security methods, BC systems will face various security issues and vulnerabilities. Among these issues, device authentication is one of the most primary problems. It aims to validate whether a device is indeed a legitimate one that has been registered in the system. It is a crucial task in many BC or RFID applications such as access control to an area, electronic payment, and temper-evident packaging. But the limited computing capability of the BDs restricts the implementation and deployment of cryptographic authentication algorithms. In fact, commodity off-the-shelf (COTS) passive RFID tags do not support strong cryptographic operation and current UHF tags which even have no cryptographic capabilities. In addition, since BDs (i.e., RFID tags) are simple and cheap, their memory may not be securely protected, which is easy for adversaries to crack and intercept any stored identity information. For example, identity-based attacks (IBA) are one of the most severe threats to the BC systems, and they are easy to launch. Due to lack of appropriate security solutions, an IBA attacker can sniff the traffic in the BC systems and get to know the real identities and media access control (MAC) addresses of the legitimate BDs, and masquerade as a legitimate BD by modifying its own identities and MAC address. Furthermore, as the scale of BD deployment increases, it becomes hard to achieve a reliable and effective key distribution, management and maintenance mechanism in BC systems for BD identification and authentication.

On the other hand, there are several approaches by utilizing physical layer properties associated with wireless transmission to combat the identity impersonation attack. These physical layer authentication techniques aim at identifying a device by extracting the features of RF signals of the device hardware as fingerprints without inducing high energy and computation consumption at BDs. However, existing physical layer authentication techniques still have serious weaknesses and face a number of technical challenges for eventually deploying in BC systems.

Since RFID is the only mature and widely used BC applications, existing security solutions for BC systems mainly focus on the RFID systems. Existing solutions, which have been applied in BC systems in practice, mainly depend on crypto systems to provide secure communication and authentication. For instance, most RFID systems employ EPCglobal data and communication standards to implement their communication protocols. In these protocols, each RFID tag stores a unique and random number as an identity (ID) allocated by a back-end server for subsequent identification and authentication. It can be easily intercepted by adversaries, which could induce the most serious threats and attacks to BC systems, such as tracking, IBAs, replay attack and device cloning. To overcome these vulnerabilities, most amended approaches applied the encrypted version of secrecy information as an identity proof, such as encrypted ID and Electronic Product Code (EPC). But these approaches require prior sharing of an encryption key, which makes key distribution and management challenging with the increase of BDs. On the other hand, BDs are limited platforms in terms of memory, supply energy and computation resources. It is inappropriate and impossible to employ complex cryptographic algorithms for resource-constrained BDs. To this end, some lightweight protocols such as the EPCglobal C1G2 protocol or YA-TRAP and its successors only employ XOR or simple hash functions to hide the ID information. However, XOR and hash functions provide insufficient security. After eavesdropping the initial communication between a reader and a BD, a malicious attacker can easily unveil and intercept the shared ID information and carry out tracing, IBAs and impersonation attacks. Therefore, there is a trade-off between security and complexity about the employment of the cryptographic algorithms. And, the existing security solutions for resource-limited BDs only depending on crypto systems cannot effectively solve the authentication and identification vulnerabilities and threats.

On the other hand, there are several approaches in the literature that perform authentication by making use of the physical layer features of the BC systems. Physical layer authentication techniques aim at identifying a device by extracting the features of backscattered RF signals or the device hardware as fingerprints. Such techniques have been proposed for several applications and wireless platforms, but few investigations addressed the BC systems and are limited to RFID systems. For instance, J. Han, et al., leveraged the internal similarity of RFID tags' communication signals, concretely the covariance among two consecutive sequences of tag's RN16 preamble signal pulses, to extract hardware features as a fingerprint for authentication in "GenePrint: Generic and Accurate Physical-Layer Identification for UHF RFID Tags", IEEE/ACM Transactions on Networking, vol. 24, no. 2, pp. 846-858, 2016. G. Wang, et al., proposed Hu-Fu by utilizing the unique inductive coupling feature of two adjacent RFID tags as their identity information for authentication in "Towards replay-resilient RFID authentication", 24th Annual International Conference on Mobile Computing and Networking (MobiCom' 18), New Delhi, India, October 29-November 2, 2018. B. Danev, et al., proposed a physical layer identification scheme by extracting the modulation shape and spectral features of backscattered signals from RFID tags in "Physical-layer identification of RFID devices", Proceedings of the 18th conference on USENIX security symposium, Montreal, Canada, 2009. It assumes that close proximity is among devices and their readers and the position of a tag with respect to its acquisition readers is fixed. D. Zanetti, et al., proposed a fingerprinting scheme that measures average baseband power (ABP) and time interval error (TIE) from the fixed preamble of RN16 packets in "Physical-layer identification of UHF RFID tags", MobiCom'10 Proceedings of the sixteenth annual international conference on Mobile computing and networking, Chicago, Illinois, USA, 2010. But the ABP and TIE are sensitive and unstable when measured from varying distances and positions.

Notably, the existing schemes mainly focus on the authentication in RFID systems with specific implementation standards of RF signals, without considering the development of BC and its increasingly wide applications that are not limited in RFID systems. Furthermore, the current work mostly depends on hardware-based features and software-based features to achieve authentication of BDs. These two features both are vulnerable to impersonation and RF signal replay attacks, since attackers can easily learn their constant RF signal features of a genuine device or record their RF signals to mimic a legitimate device.

In summary, at present, it still lacks a complete security scheme to offer fairly secure and robust authentication on BDs in either static or mobile status. Besides, when attacks happening, a detection and tracing mechanism is also needed to determine the number of attackers and localize their positions. Therefore, it is desirable to provide a more effective solution to provide physical layer enhanced authentication and attacker tracing in wireless communication systems.

Publication "Automatic User Identification and Authentication through the Motions Captured from Sequential Human Activities Using RFID" by Anna Huang et. al. discloses a non-intrusive automatic user identification and authentication system through human motions captured from their daily activities based on RFID. US2019 214 855 discloses wireless power delivery tracking. CN10 342 7993 discloses authentication for near field communication.

SUMMARY

The present invention is defined in the independent claims. Preferred embodiments are defined in the dependent claims.

The present disclosure is going to solve the aforementioned problems by proposing methods and apparatuses for methods and apparatuses for physical layer enhanced authentication and attacker tracing based on positioning and other physical layer features from backscattered signals, such as received signal strength (RSS), in order to achieve an adaptive device authentication and attacker positioning and tracing. Other features and advantages of embodiments of the present disclosure will also be understood from the following description of specific embodiments when read in conjunction with the accompanying drawings, which illustrate, by way of example, the principles of embodiments of the present disclosure.

In a first aspect of the present disclosure, there is provided a method implemented at a network node. The method comprises transmitting a radio frequency signal to a terminal device; and receiving, in response to the radio frequency signal, a backscattered signal from a terminal device, wherein the backscattered signal comprises identification information of the terminal device. The method further comprises measuring an RSS value of the backscattered signal; and authenticating the terminal device based on the identification information of the terminal device and the RSS value of the backscattered signal.

In some embodiments, authenticating the terminal device based on the identification information of the terminal device and the RSS value of the backscattered signal may comprise: obtaining the identification information of the terminal device from the backscattered signal; comparing the obtained identification information of the terminal device with registered identification information of the terminal device in the network node; and authenticating, in response to the obtained identification information of the terminal device not matching the registered identification information of the terminal device, the terminal device as an illegal device.

In some embodiments, authenticating the terminal device based on the identification information of the terminal device and the RSS value of the backscattered signal may further comprise: estimating, in response to the obtained identification information of the terminal device matching the stored identification information of the terminal device, a current location of the terminal device based on the RSS value and an angle of arrival (AOA) value of the backscattered signal; comparing the current location of the terminal device with predetermined location information of the terminal device; and authenticating, in response to the current location of the terminal device not matching the predetermined location information of the terminal device, the terminal device as an illegal device, and/or authenticating, in response to the current location of the terminal device matching the predetermined location information of the terminal device, the terminal device as a legitimate device.

In some embodiments, the terminal device may be a static device. The predetermined location information may be a registered location of the terminal device in the network node.

In some embodiments, the terminal device may be a mobile device. The predetermined location information may be a predicted location of the terminal device predicted by the network node.

In some embodiments, the method may further comprise recording the RSS value of the backscattered signal.

In some embodiments, authenticating the terminal device based on the identification information of the terminal device and the RSS value of the backscattered signal may further comprise: obtaining a set of power differences based on the RSS values of the backscattered signals recorded over a period of time and transmission powers of the corresponding radio frequency signals; clustering the set of power differences into two clusters; calculating a distance between the two clusters; and authenticating, in response to the distance being less than a first threshold, the terminal device as a legitimate device, and/or authenticating, in response to the distance being not less than the first threshold, the terminal device as an illegal device.

In some embodiments, authenticating the terminal device based on the identification information of the terminal device and the RSS value of the backscattered signal may further comprise: obtaining a set of power differences based on the RSS values of the backscattered signals recorded over a period of time and transmission powers of the corresponding radio frequency signals; constructing two RSS trace vectors based on the set of power differences; calculating a similarity between the two RSS trace vectors; and authenticating, in response to the similarity being more than a second threshold, the terminal device as a legitimate device, and/or authenticating, in response to the similarity being not more than the second threshold, the terminal device as an illegal device.

In some embodiments, authenticating the terminal device based on the identification information of the terminal device and the RSS value of the backscattered signal may further comprise: transmitting a request to the terminal device for a plurality of RSS values of the radio frequency signals measured over a period of time; receiving, in response to the request, the plurality of RSS values of the radio frequency signals from the terminal device; comparing the received plurality of RSS values of the radio frequency signals and the recorded RSS values of the backscattered signals corresponding to the radio frequency signals over the same period of time; and authenticating, in response to the received plurality of RSS values matching the recorded RSS values, the terminal device as a legitimate device, and/or authenticating, in response to the received plurality of RSS values not matching the recorded RSS values, the terminal device as an illegal device.

In some embodiments, authenticating the terminal device based on the identification information of the terminal device and the RSS value of the backscattered signal may further comprise: transmitting a request to the terminal device for a plurality of RSS values of the radio frequency signals measured over a period of time; receiving, in response to the request, the plurality of RSS values of the radio frequency signals from the terminal device; constructing a first RSS vector based on the received plurality of RSS values and the transmission powers of the respective radio frequency signals; constructing a second RSS vector based on the recorded RSS values of the backscattered signals and the transmission powers of the corresponding radio frequency signals; calculating a similarity between the first RSS vector and the second RSS vector; authenticating, in response to the similarity being more than a third threshold, the terminal device as a legitimate device, and/or authenticating, in response to the similarity being not more than the third threshold, the terminal device as an illegal device.

In some embodiments, authenticating the terminal device based on the identification information of the terminal device and the RSS value of the backscattered signal may further comprise: transmitting a request to the terminal device for a plurality of RSS values of the radio frequency signals measured over a period of time; receiving, in response to the request, the plurality of RSS values of the radio frequency signals from the terminal device; comparing an amount of the received plurality of RSS values with an amount of the recorded RSS values of the backscattered signals over the same period of time; authenticating, in response to the amount of the received plurality of RSS values being not equal to the amount of the recorded RSS values, the terminal device as an illegal device, and/or in response to the amount of the received plurality of RSS values being equal to the amount of the recorded RSS values: constructing a first RSS vector based on the received plurality of RSS values and the transmission powers of the respective radio frequency signals; constructing a second RSS vector based on the recorded RSS values of the backscattered signals and the transmission powers of the corresponding radio frequency signals; calculating a similarity between the first RSS vector and the second RSS vector; authenticating, in response to the similarity being more than a third threshold, the terminal device as a legitimate device, and/or authenticating, in response to the similarity being not more than the third threshold, the terminal device as an illegal device.

In some embodiments, the radio frequency signal may be transmitted with a transmission power randomly selected from a range of transmission powers associated with the terminal device.

In some embodiments, the method may further comprise obtaining an RSS set based on the recorded RSS values of the backscattered signals and transmission powers of the corresponding radio frequency signals. In some embodiments, the method may further comprise transmitting, in response to a request from the terminal device, the recorded RSS values of the backscattered signals the RSS set to the terminal device.

In some embodiments, the method may further comprise predicting a target network node into whose coverage the terminal device will move; and sending location prediction related information, the RSS value of the backscattered signal and the estimated location of the terminal device to the target network node.

In some embodiments, the method may further comprise clustering the set of power differences into at least two clusters; calculating, for each of the at least two clusters, a mean value; calculating a respective location based on each of the mean values; comparing each of the calculated locations with the registered location of the terminal device; determining the cluster of the at least two clusters for which the calculated location does not match the registered location of the terminal device to be an abnormal cluster.

In some embodiments, the method may further comprise obtaining a motion trajectory based on the calculated locations.

In some embodiments, the method may further comprise partitioning the set of power differences into two RSS classes; calculating, for each of the two RSS classes, a mean value; calculating a respective location based on each of the mean values; comparing each of the calculated locations with the registered location of the terminal device; determining one of the two RSS classes for which the calculated location does not match the registered location of the terminal device to be an abnormal class; calculating a respective location based on each of the power differences in the abnormal class; and obtaining a motion trajectory based on the calculated locations.

In a second aspect of the present disclosure, there is provided an apparatus comprising at least one processor and at least one memory including computer executable instructions. The at least one memory and the computer executable instructions configured to, with the at least one processor, cause the apparatus at least to perform any step of the method according to the first aspect of the present disclosure.

In a third aspect of the present disclosure, there is provided a method implemented at a terminal device. The method comprises: receiving, from a network node, a radio frequency signal; transmitting, in response to the radio frequency signal, a backscattered signal to the network node, wherein the backscattered signal comprises identification information of the terminal device. The method further comprises measuring and recording an RSS value of the radio frequency signal. The method further comprises: transmitting a request to the network node for a first RSS set obtained based on a plurality of RSS values of the backscattered signals measured over a period of time and transmission powers of the corresponding radio frequency signals; receiving the RSS set from the network node; and authenticating the network node based on the recorded RSS values of the radio frequency signals over the same period of time and the RSS set.

In some embodiments, authenticating the network node based on the recorded RSS values of the radio frequency signals over the same period of time and the RSS set may further comprise: calculating a similarity between the plurality of RSS values of the backscattered signals and the recorded RSS values of the radio frequency signals over the same period of time; authenticating, in response to the similarity being more than a threshold, the network node as a legitimate device, and/or authenticating, in response to the similarity being not more than the threshold, the network node as an illegal device.

In some embodiments, authenticating the network node based on the recorded RSS values of the radio frequency signals over the same period of time and the RSS set may further comprise: comparing an amount of the plurality of RSS values of the backscattered signals with an amount of the recorded RSS values of the radio frequency signals corresponding to the backscattered signals over the same period of time; and authenticating, in response to the amount of the plurality of RSS values of the backscattered signals being not equal to the amount of the recorded RSS values, the network node as an illegal device, and/or in response to the amount of the plurality of RSS values of the backscattered signals being equal to the amount of the recorded RSS values: calculating a similarity between the plurality of RSS values of the backscattered signals and the recorded RSS values; authenticating, in response to the similarity being more than a threshold, the network node as a legitimate device, and/or authenticating, in response to the similarity being not more than the threshold, the network node as an illegal device.

In some embodiments, the method may further comprising transmitting, in response to a request from the network node, the recorded RSS values of the radio frequency signals to the network node.

In a fourth aspect of the present disclosure, there is provided an apparatus comprising at least one processor and at least one memory including computer executable instructions. The at least one memory and the computer executable instructions configured to, with the at least one processor, cause the apparatus at least to perform any step of the method according to the third aspect of the present disclosure.

In a fifth aspect of the present disclosure, there is provided a computer readable storage medium having computer executable instructions embodied thereon which, when executed on a computer, cause the computer to perform any step of the methods according to the first or third aspect of the present disclosure.

With the various aspects and embodiments of the present disclosure as mentioned above, a new solution can be provided to achieve an adaptive multi-stage authentication and attacker positioning and tracing based on positioning information of terminal devices from the RSSs of backscattered signals.

BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:

Figure 1 is a diagram illustrating an exemplary implementation of a BC system;
Figure 2 is a flowchart illustrating a method for authenticating a terminal device implemented at a network node according to some embodiments of the present disclosure;
Figure 3 is a flowchart illustrating an exemplary implementation for adaptive device authentication according to some embodiments of the present disclosure;
Figure 4 is a flowchart illustrating further operations for adaptive multi-stage authentication according to some embodiments of the present disclosure;
Figure 5 is a flowchart illustrating operations for adaptive attacker detection and tracing according to some embodiments of the present disclosure;
Figure 6 is a flowchart illustrating a method for authenticating a network node implemented at a terminal device according to some embodiments of the present disclosure;
Figure 7 is a diagram illustrating an exemplary procedure for adaptive multi-stage authentication and attacker tracing according to some embodiments of the present disclosure;
Figure 8 is a signaling diagram for an adaptive multi-stage mutual authentication procedure according to some embodiments of the present disclosure; and
Figure 9 is a schematic block diagram illustrating an apparatus according to some embodiments of the present disclosure.

DETAILED DESCRIPTION

Hereinafter, the principle of the present disclosure will be described with reference to illustrative embodiments. It should be understood, all these embodiments are given merely for one skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification.

References in the specification to "one embodiment," "an embodiment," "an example embodiment," etc. indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

For illustrative purposes, several embodiments of the present disclosure may be described in the context of a BC system. Those skilled in the art will appreciate, however, that the concept and principle of the several embodiments of the present disclosure may also be applied to other types of wireless communication system including terminal devices with backscatter communication capacity.

As used herein, the term "circuitry" may refer to one or more or all of the following:

(a) hardware-only circuit implementations (such as implementations in only analog and/or digital circuitry); and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the singular forms "a", "an", and "the" are intended to include the plural forms as well, unless the context clearly indicates otherwise. The term "includes" and its variants are to be read as open terms that mean "includes, but is not limited to". The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

As described above, the security issues, notably authentication, rapidly grow in its importance with the widespread uses of BC systems. Especially, if the access control applications identify a BD using a message from it, the message is vulnerable to eavesdropping attackers and then can be used for tracking or replay attacks, like IBAs and impersonation attacks. Hence, without appropriate mechanisms for user identity authentication, it could bring a huge risk to BC systems by authorizing illegitimate users the legal access capability. Most of the existing security protocols depend on complex crypto protocols and need sufficient energy and computational resources, making them infeasible in BC systems, since BDs only possess finite energy supply and low computing capability. On the other hand, some of the existing physical layer authentication approaches rely on unique hardware features or characteristics to realize identification and authentication, which cannot completely solve the authentication issues in BC systems. For example, the difference of the hardware features between BDs is usually too small in practice, which could also be influenced by noise and interference, making them difficult to be extracted as fingerprints of BDs. Thus, it still lack a general and robust physical layer authentication and attacker tracing scheme to support at least the following expected features:

1) Lightweight, self-adjust and robust authentication for both static and mobile BD scenarios with high accuracy; and
2) Able to detect the number of attackers and trace their positions.

The present disclosure focuses on how to design a general and lightweight authentication solution to achieve high authentication accuracy and enhanced security in BC systems with physical layer features, and how to determine the number of attackers and trace their positions in case of detecting attacks. That is, the present disclosure aims to propose a physical layer enhanced authentication and attacker tracing scheme for BC systems to solve at least the following technical problems:

1) How to realize a lightweight and robust authentication mechanism for BC systems based on the RSS of backscattered signals and BD positioning information for example in order to prevent the IBAs, RF signal forging, replay and relay attacks; and
2) How to determine the number of attackers and trace their positions with recorded RSS values.

Accordingly, in accordance with some exemplary embodiments, the present disclosure provides a solution for enabling adaptive multi-stage authentication and attacker positioning and tracing. The solution may be applied to any type of wireless communication system including terminal devices with backscatter communication capacity, such as a BC system.

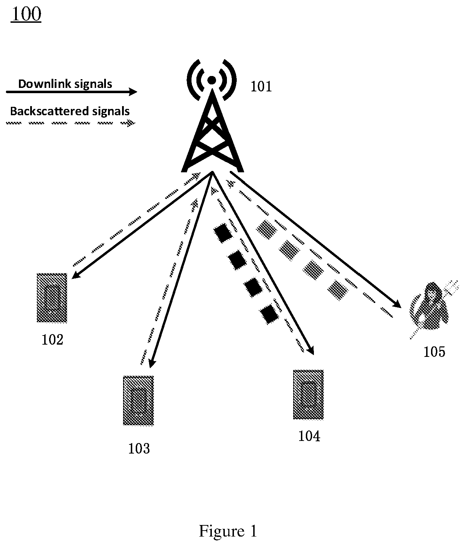

Figure 1 shows a diagram illustrating an exemplary implementation of a BC system 100. The BC system 100 may comprise one or more access points (APs) such as an AP 101 and multiple BDs such as BDs 102, 103, and 104. Those BDs can be any type of terminal device such as an IoT device with backscatter communication capacity. Moreover, those BDs can be an active device, a semi-active device, or a passive device. There may also be one or more attackers such as attacker 105 in the BC system 100. The AP 101 may transmit downlink wireless signals to power all BDs and receive backscattered signals from one or more BDs. In such a system, all BDs may alternately perform backscatter transmission in a time-division multiple access manner. In each specific period of time or frame, the AP 101 may select only one BD such as the BD 104 to communicate, making the backscattered signals backscattered only from the BD 104. Normally, the AP 101 may emit downlink signals to power and invoke a selected BD nearby. This selected BD may transmit its ID information by backscattering and modulating the incident downlink signals to the AP 101 for identity authentication and subsequent network access. Thus, the AP 101 may verify the ID of the selected BD and then provide related and authorized network services.

An attacker such as the attacker 105, can listen to all communication between the AP 101 and those BDs, and may be able to intercept the ID information of legitimate BDs because of lightweight thus insecure cryptographic mechanisms. Therefore, the attacker 105 can masquerade as a legitimate BD to carry out impersonation attacks at any time during the communication between legitimate BDs and the AP 101. For example, the attacker 105 as an adversary can masquerade a genuine BD by modifying its own MAC address and ID into genuine ones and launch the IBA during other time slots. Moreover, the attacker 105 can record the backscattered signals backscattered by legitimate BDs and then transmit the recorded backscattered signals to the AP 101 for replay attacks. Also, the attacker 105 can relay the recorded backscattered signals to the AP 101 with manipulation of data in the backscattered signals for relay attacks. Seriously, the attacker 105 can even directly forge backscattered signals identical to the backscattered signals backscattered by a genuine BD to pretend this BD for a network access service.

In the above system, the AP 101 wants continuously authenticate those BDs to prevent the attacks described above. Thus, the major task for the AP 101 is to identify a legitimate BD or to verify that a signal transmission is from a legitimate BD at all times. To support various scenarios, the present disclosure presents an improved mechanism for device authentication and attacker tracing based on positioning with backscattered signals, which adaptively supports both static and mobile scenarios.

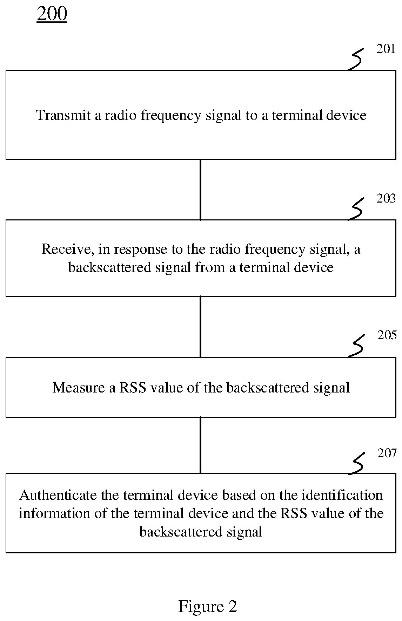

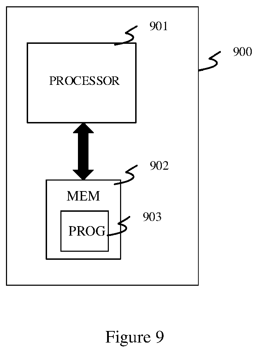

Figure 2 illustrates a method 200 for authenticating a terminal device according to some embodiments of the present disclosure. The method 200 can be implemented by an appropriate apparatus, which will be described in details later in connection with Figure 9. The method 200 can be implemented at network node side, for example at an AP such as the AP 101 shown in Figure 1, or at a server in a wireless communication system. The terminal device to be authenticated may be any one of BDs 102, 103, and 104 shown in Figure 1. The method 200 may start at block 201. In block 201, a network node may transmit a radio frequency signal to a terminal device, and then receive, in response to the radio frequency signal, a backscattered signal from a terminal device as shown in block 203, wherein the backscattered signal comprises identification information of the terminal device. Then, in blocks 205 and 207, the network node may measure an RSS value of the backscattered signal, and then authenticate the terminal device based on the identification information of the terminal device and the RSS value of the backscattered signal.

In some embodiments, the identification information of the terminal device comprised in the backscattered signal may be an ID of the terminal device, or a MAC address of the terminal device.

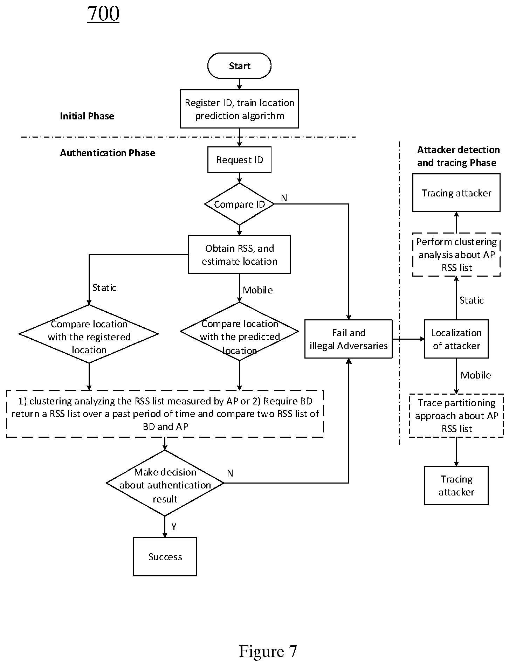

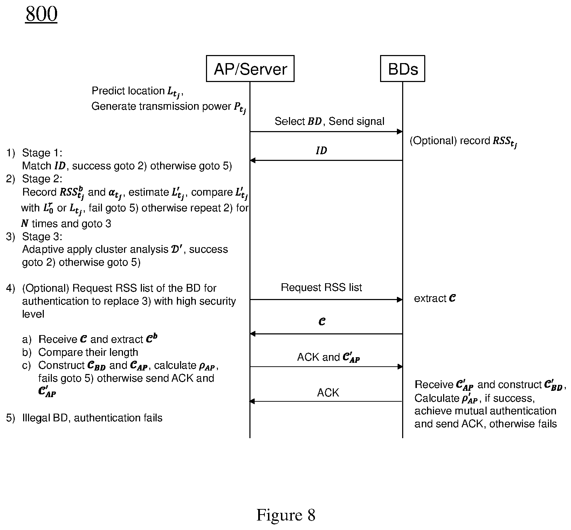

In some embodiments, the radio frequency signal may be transmitted with a transmission power randomly selected from a range of transmission powers associated with the terminal device. In some embodiments, the AP may obtain a predetermined range of transmission powers associated with the terminal device for example according to a predicted location for supporting enough communication rate and efficient power consumption during an initial phase, which will be described in details later in connection with Figures 7 and 8. The AP may then select randomly one for each transmission of downlink signals, which for example may make the measured RSS of the backscattered signal unpredictable for other nodes in a BC system for the purpose of preventing RF signal forge, replay and relay attacks.

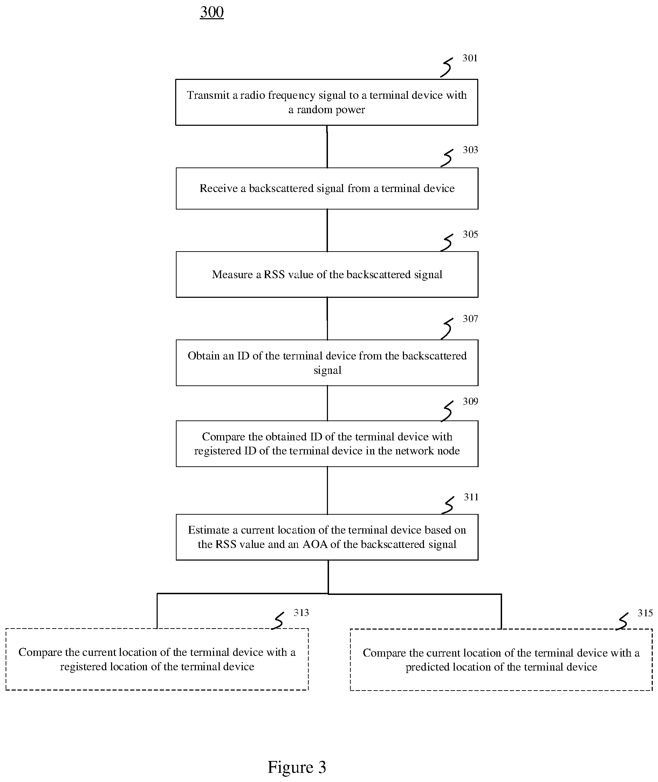

Figure 3 illustrates an exemplary implementation for adaptive device authenticating according to some embodiments of the present disclosure. Similarly, the method 300 can be implemented at the AP 101 of the BC system 100 shown in Figure 1. The terminal device to be authenticated may be any one of BDs 102, 103, and 104 shown in Figure 1. The method 300 may start at block 301. In block 301, the AP may transmit a radio frequency signal to a terminal device, and then receive, in response to the radio frequency signal, a backscattered signal from a terminal device as shown in block 303. Then the AP may measure an RSS value of the backscattered signal in blocks 305. Next, in block 307, the AP may obtain the identification information such as an ID of the terminal device from the backscattered signal. Then, the AP may compare the obtained ID of the terminal device with registered ID of the terminal device in the network node, as shown in block 309. If the obtained ID of the terminal device does not match the registered ID of the terminal device, the terminal device can be authenticated as an illegal device, i.e., a potential attacker.

In some embodiments, in response to the obtained ID of the terminal device matching the registered ID of the terminal device, in block 311, the AP may estimate a current location $L_c$ of the terminal device based on the RSS value and the value of an AOA $\alpha$ of the backscattered signal. Alternatively, the AP may estimate the current location $L_c$ of the terminal device based on the RSS value and other appropriate parameters, such as time delay, time difference of arrival (TDOA), and other parameters suitable for radio positioning technology. Next, the AP may compare the current location $L_c$ with predetermined location information of the terminal device in block 313 or 315. In some embodiments such as static scenarios, the terminal device may be a static device. The predetermined location information may be a registered location $L_0^r$ of the terminal device in the network node. Then as shown in block 313, the AP may compare the current location $L_c$ with the registered location $L_0^r$. As a result, if the current location $L_c$ does not match the registered location $L_0^r$, the terminal device can be authenticated as an illegal device, and if the current location $L_c$ matches registered location $L_0^r$, the terminal device can be authenticated as a legitimate device.

In some embodiments, the AP may alternatively compare the obtained vector (RSS, L) with a stored vector (RSS$_0$, $L_0^r$) in order to improve the accuracy of authentication, wherein RSS$_0$ is a registered RSS value of the terminal device stored in the network node.

In some other embodiments such as mobile scenarios, the terminal device may be a mobile device. Then the predetermined location information may be a predicted location $L_0^p$ of the terminal device predicted by the network node. In some embodiments, the predicted location $L_0^p$ may be predicted by the AP during the initial phase for example based on a location trajectory history of the terminal device by mean of machine learning. Then alternatively, as shown in block 313, the AP may compare the current location $L_c$ with the predicted location $L_0^p$ in order to validate the terminal device. As a result, if the current location $L_c$ does not match the predicted location $L_0^p$, the terminal device can be authenticated as an illegal device, and if the current location $L_c$ matches predicted location $L_0^p$ of the terminal device, the terminal device can be authenticated as a legitimate device.

In some embodiments, the AP may record the RSS value of the backscattered signal. In some embodiments, the AP can record a plurality of RSS values $RSS_{t_j}^b, RSS_{t_{j+1}}^b, ..., RSS_{t_{j+N}}^b$ of the backscattered signals over a period of time, e.g., within N timeslots. In some embodiments, the AP may obtain the set $\mathcal{D} = \{RSS_{t_j}^b, RSS_{t_{j+1}}^b, ..., RSS_{t_{j+N}}^b\}$. In some embodiments, in response to a request from the terminal device, the AP may transmit the recorded RSS values $RSS_{t_j}^b, RSS_{t_{j+1}}^b, ..., RSS_{t_{j+N}}^b$ of the backscattered signals to the terminal device for example for a further mutual authentication implemented at the terminal device. Alternatively, in some embodiments, the AP may first obtain/construct an RSS set/vector $\mathcal{D}' = \{P_{t_j} - RSS_{t_j}^b, P_{t_{j+1}} - RSS_{t_{j+1}}^b, ..., P_{t_{j+N}} - RSS_{t_{j+N}}^b\}$ based on the plurality of recorded RSS values of the backscattered signals and transmission powers of the corresponding radio frequency signals, and then transmit the RSS set/vector to the terminal device. Moreover, in some embodiments, the AP may also transmit a request to the terminal device requesting the terminal device to send a plurality of measured RSS values $RSS_{t_j}, RSS_{t_{j-1}}, ..., RSS_{t_{j-M}}$ of radio frequency signals measured by the terminal device to the AP for example for a further authentication implemented at the AP.

The above operations described in Figure 2 or 3 can be used as a complete device authentication scheme, but they can also be preferably combined with the following operations so as to be extended into an enhanced multi-stage/level authentication scheme with high robustness.

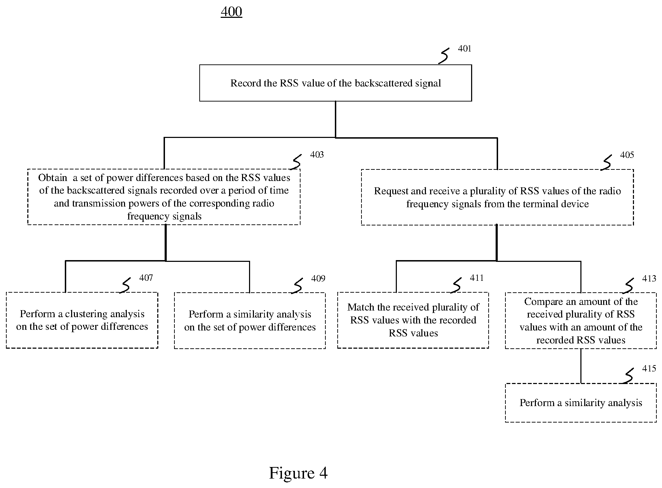

Figure 4 illustrates further operations for the multi-stage authentication scheme according to some embodiments of the present disclosure. Similarly, the method 400 can be implemented at the AP 101 of the BC system 100 shown in Figure 1. The terminal device to be authenticated may be any one of BDs 102, 103, and 104 shown in Figure 1. The method 400 may start at block 401. In block 401, the AP may record the RSS value of the backscattered signal. For example, the AP may record a plurality of RSS values of the backscattered signals within N time slots to obtain $\mathcal{D} = \{RSS_{t_j}^b, RSS_{t_{j+1}}^b, ..., RSS_{t_{j+N}}^b\}$. In some embodiments, the AP may receive a plurality of continuous transmissions of backscattered signals over a certain period of time, and accordingly continuously and repeatedly validate the terminal device for each transmission. In other words, the AP may validate the terminal device for each $RSS_{t_j}^b$.

In an exemplary implementation, as shown in block 403, the AP may obtain a set of power differences based on the RSS values of the backscattered signals recorded over the period of time and transmission powers of the corresponding radio frequency signals. In some embodiments, each of the power differences may indicate a difference between each of the RSS values and a transmission power of the corresponding radio frequency signal. In some embodiments, the set of power differences can be obtained as

$$\mathcal{D}' = \{P_{t_j} - RSS^b_{t_j}, P_{t_{j+1}} - RSS^b_{t_{j+1}}, \dots, P_{t_{j+N}} - RSS^b_{t_{j+N}}\} .$$

Next, as shown in block 407, the AP may then perform a clustering analysis on the set D' by utilizing a clustering algorithm for additional authentication in order to enhance authentication accuracy in case of inaccurate location calculation or prediction. In some embodiments, the AP may cluster the set $\mathcal{D}'$ into two clusters, and calculate a distance between the two clusters. As a result, if the calculated distance is less than a predetermined threshold, the terminal device can be authenticated as a legitimate device, and if the calculated distance is more than the predetermined threshold, the terminal device can be authenticated as an illegal device. A detailed exemplary embodiment is described below in connection with Figures 7 and 8.

In an exemplary implementation, as shown in block 409, after obtaining the set $\mathcal{D}'$, the AP may perform a similarity analysis on the set $\mathcal{D}'$ for additional authentication in order to enhance authentication accuracy. In some embodiments, the AP may for example exploit a trace partitioning approach and reconstruction technique. For example, the AP may construct two RSS trace vectors based on the set $\mathcal{D}'$. Then the AP may calculate a similarity between the two RSS trace vectors As a result, if the calculated similarity is more than a predetermined threshold, the terminal device can be authenticated as a legitimate device, and if the calculated similarity is not more than the predetermined threshold, the terminal device can be authenticated as an illegal device. Also, a detailed exemplary embodiment is described below in connection with Figures 7 and 8.

In some embodiments such as some scenarios where the terminal device can measure RSS values of radio frequency signals by itself, the AP may request the terminal device to send its measured RSS values for example in the past N time slots, so that the AP can validate the terminal device by comparing two sets of *N* RSS values provided by the terminal device and measured by the AP, respectively. This alternative scheme can be provided as a replacement of the above clustering analysis scheme for example to achieve high-level security in authentication. In an exemplary implementation, as shown in block 405, the AP may transmit a request to the terminal device requesting the terminal device to send a plurality of RSS values $RSS_{t_j}, RSS_{t_{j-1}}, \dots, RSS_{t_{j-M}}$ of radio frequency signals measured over a period of time. Then in response to the request, the AP may receive the plurality of RSS values $RSS_{t_j}, RSS_{t_{j-1}}, \dots, RSS_{t_{j-M}}$ from the terminal device. Next, in block 411, the AP may compare the received plurality of RSS values $RSS_{t_j}, RSS_{t_{j-1}}, \dots, RSS_{t_{j-M}}$ of radio frequency signals and the recorded RSS values $RSS^b_{t_j}, RSS^b_{t_{j+1}}, \dots, RSS^b_{t_{j+N}}$ of the backscattered signals corresponding to the radio frequency signals over the same period of time. As a result, if the received plurality of RSS values matches the recorded RSS values, the terminal device can be authenticated as a legitimate device, and if the received plurality of RSS values does not match the recorded RSS values, the terminal device can be authenticated as an illegal device.

In an exemplary implementation, as shown in block 415, after receiving the plurality of RSS values of the radio frequency signals from the terminal device, the AP may perform a similarity analysis. Specifically, the AP may construct a first RSS vector based on the received plurality of RSS values and the transmission powers of the respective radio frequency signals, and a second RSS vector based on the recorded RSS values of the backscattered signals and the transmission powers of the corresponding radio frequency signals. For example, the AP may construct two vectors as follows:

$$\mathcal{C}_{BD} = \{2(P_{t_j} - RSS_{t_j}), 2(P_{t_{j-1}} - RSS_{t_{j-1}}), \dots, 2(P_{t_{j-M}} - RSS_{t_{j-M}})\} = \{\mathcal{C}_{t_j}, \mathcal{C}_{t_{j-1}}, \dots, \mathcal{C}_{t_{j-M}}\}$$

$$\mathcal{C}_{AP} = \{P_{t_j} - RSS^b_{t_j}, P_{t_{j-1}} - RSS^b_{t_{j-1}}, \dots, P_{t_{j-M}} - RSS^b_{t_{j-M}}\} = \{\mathcal{C}^b_{t_j}, \mathcal{C}^b_{t_{j-1}}, \dots, \mathcal{C}^b_{t_{j-M}}\}$$

Then the AP may calculate a similarity between the first RSS vector $\mathcal{C}_{BD}$ and the second RSS vector $\mathcal{C}_{AP}$. As a result, if the calculated similarity is more than a predetermined threshold, the terminal device can be authenticated as a legitimate device, and if the calculated similarity is not more than the predetermined threshold, the terminal device can be authenticated as an illegal device.

As a further exemplary implementation, the AP may first compare an amount of the received plurality of RSS values with an amount of the recorded RSS values of the backscattered signals over the same period of time in block 413. For example, the AP may compare a length of the list of the received plurality of RSS values with a length of the list of the recorded RSS values of the backscattered signals over the same period of time. If the amount of the received plurality of RSS values is not equal to the amount of the recorded RSS values, the terminal device can be authenticated as an illegal device. The AP may then proceed to block 415 if the amount of the received plurality of RSS values is equal to the amount of the recorded RSS values.

Again, a detailed exemplary embodiment is provided below in connection with Figures 7 and 8.

Further, in some embodiments such as mobile scenarios, the terminal device may move from or to the coverages of other APs. The terminal device may then hand over from a source AP to a target AP. These two APs can cooperate with each other to finish the handover authentication process. In such scenarios, the (source) AP may predict a target AP into whose coverage the terminal device will move, and send location prediction related information, the RSS value of the backscattered signal and the estimated location of the terminal device to the target AP. In some embodiments, the source AP may provide additional authentication related information to the target AP like the cooperation manner in a scenario with multiple APs. In some embodiments, with a trajectory prediction module in the source AP, the source AP can predict the target AP and send handover parameters to it, such as the parameters of the trajectory prediction algorithm. Before entering the coverage of the target AP, the target AP will start to record the RSS values of backscattered signals backscattered from the terminal device when the source AP communicates with the terminal device. Then, the target AP can estimate the location $L_d$ of the terminal device, and compare it with the predicted location $L_p$ with the prediction algorithm, as well as the estimated location $L_s$ sended from the source AP. If the three locations, $L_d$, $L_p$, and $L_s$, are close to each other (for example, any of the differences therebetween is less than a predetermined threshold), the target AP may successfully authenticate the terminal device. In some embodiments, similarly, the target AP may for example record $N$

RSS values $RSS_{t_j}^b, RSS_{t_{j+1}}^b, \dots, RSS_{t_{j+N}}^b$ for N time slots, and obtain the set

$\mathcal{D}' = \{P_{t_j} - RSS_{t_j}^b, P_{t_{j+1}} - RSS_{t_{j+1}}^b, \dots, P_{t_{j+N}} - RSS_{t_{j+N}}^b\}$ with the power information provided by the source AP. Then, the target AP may authenticate the terminal device in a similar way as described above. The above two processes will keep going until that the terminal device enters the coverage of the target AP, which will start to transmit its own downlink signals to power the terminal device and take charge of all authentication processes as the previous source AP did.

As described above, the above operations described in connection with Figure 4 can be preferably combined with those operations described in connection with Figure 2 or 3 so as to form an enhanced multi-stage/level authentication scheme. Alternatively, the above operations described in connection with Figure 4 can be also used as an independent and complete authentication scheme. With those operations, a multi-stage authentication scheme can be provided with high-level security, which is also adaptive and intelligent to static and mobile BD scenarios.

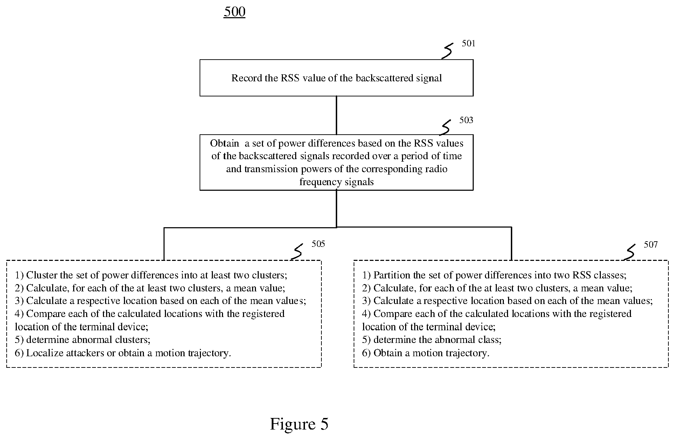

Furthermore, the present disclosure also supports discovering attacker amount and tracing their trajectories. Figure 5 illustrates operations of an adaptive attacker detection and tracing according to some embodiments of the present disclosure. The method 500 can be implemented at the AP 101 of the BC system 100 shown in Figure 1. When the authentication of the terminal device such as BDs 102, 103, and/or 104 shown in Figure 1 fails, there will be malicious adversaries who are implementing attacks, such as impersonation attack, replay attack and relay attack.

The present disclosure may conduct an analysis on the RSS values recorded by the AP to determine the number of attackers and to localize and track their locations. Since there are many and various attack actions, such as static attackers and mobile attackers, we assume that attackers will take the attacking actions that are most likely to succeed. Based on this assumption, the attacker will choose to stay static when the terminal device is static, because it is difficult for mobile attackers to mimic the backscatter action of terminal devices without being discovered due to the random transmission power of signals. Thus, it may only consider the case that attackers are static regardless of their number in the static terminal devices scenario. On the other hand, in the mobile terminal devices scenario, it may only consider the case that an attacker is close to a legitimate terminal device and follows this terminal device.

Return to Figure 5, the method 500 may start at block 501. Similar to the steps described in blocks 401 and 403, in blocks 501 and 503, the AP may record the RSS value of the backscattered signal, and may then obtain a set of power differences based on the RSS values of the backscattered signals recorded over the period of time and transmission powers of the corresponding radio frequency signals, for example, obtaining

$\mathcal{D}' = \{P_{t_j} - RSS_{t_j}^b, P_{t_{j+1}} - RSS_{t_{j+1}}^b, \dots, P_{t_{j+N}} - RSS_{t_{j+N}}^b\}$ . Then, in an exemplary implementation, as shown in block 505, the AP may perform a clustering analysis on the set of power differences $\mathcal{D}'$. The AP may utilize medoids or average values of different clusters to localize positions of static attackers or a motion trajectory of a mobile attacker. In some embodiments, the AP may cluster the set of power differences $\mathcal{D}'$ into at least two clusters. Next, the AP may calculate a mean value for each of the at least two clusters, and then calculate a respective location based on each of the mean values. Then the AP may compare each of the calculated locations with the registered location $L_0^r$ of the terminal device, and determine the cluster of the at least two clusters for which the calculated location does not match the registered location $L_0^r$ of the terminal device to be an abnormal cluster.

Alternatively, in a further exemplary implementation, as shown in block 507, after obtaining the set of power differences $\mathcal{D}'$, the AP may perform a similarity analysis on the set of power differences D' in order to filter out a mobile attacker. In some embodiments, the AP may partition the set of power differences D' into two RSS classes. Next, the AP may calculate a mean value for each of the two RSS classes, and then calculate a respective location based on each of the mean values. Then the AP may compare each of the calculated locations with the registered location $L_0^r$ of the terminal device, and determine one of the two RSS classes for which the calculated location does not match the registered location $L_0^r$ of the terminal device to be an abnormal class. The AP then calculate a respective location based on each of the power differences (corresponding to each abnormal RSS value) in the abnormal class, and obtain a motion trajectory based on the calculated locations.

Again, a detailed exemplary embodiment can be found below in connection with Figures 7 and 8.

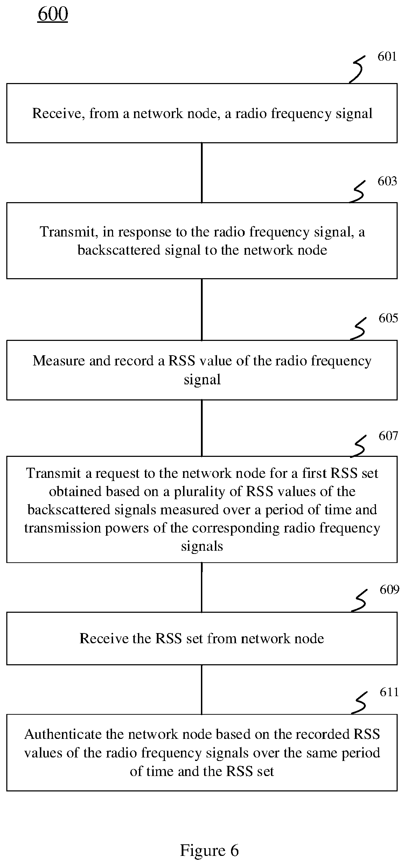

The adaptive device authentication scheme described in the present disclosure can be also extended into an adaptive mutual authentication. It means that a terminal device may also authenticate a network node while the network node is authenticating the terminal device. Figure 6 illustrates a method 600 for authenticating a network node according to some embodiments of the present disclosure. The method 600 can be implemented by an appropriate apparatus, which will be described in details later in connection with Figure 9. The method 600 can be implemented at terminal device side, for example at a terminal device such as one of BDs 102, 103, and 104 shown in Figure 1. The network node to be authenticated may be an AP such as the AP 101 shown in Figure 1. The method 600 may start at block 601. In block 601, the terminal device such as BD 104 may receive a radio frequency signal from the AP. Then, as shown in block 603, in response to the radio frequency signal, the BD may transmit a backscattered signal to the AP, wherein the backscattered signal comprises identification information of the terminal device. The identification information of the terminal device may be an ID of the terminal device, or a MAC address of the terminal device, as described above. The BD may measure and record an RSS value of the radio frequency signal in block 605. The BD may further transmit a request to the network node for a first RSS set obtained based on a plurality of RSS values of the backscattered signals measured over a period of time and transmission powers of the corresponding radio frequency signals in block 607, and then receive the RSS set from the AP in block 609. Next, in block 611, the BD may authenticate the AP based on the recorded RSS values of the radio frequency signals over the same period of time and the RSS set.

In an exemplary implementation, the BD may calculate a similarity between the plurality of RSS values of the backscattered signals and the recorded RSS values of the radio frequency signals over the same period of time. As a result, if the similarity is more than a threshold, the AP can be authenticated as a legitimate device, and if the similarity is not more than the threshold, the AP can be authenticated as an illegal device.

Alternatively, in a further exemplary implementation, the BD may first compare an amount of the plurality of RSS values of the backscattered signals with an amount of the recorded RSS values of the radio frequency signals corresponding to the backscattered signals over the same period of time. If the amount of the plurality of RSS values of the backscattered signals is not equal to the amount of the recorded RSS values, the AP can be authenticated as an illegal device. In some embodiments, in response to the amount of the plurality of RSS values of the backscattered signals is equal to the amount of the recorded RSS values, the BD may perform a similarity analysis on the set of power differences. In some embodiments, the BD may calculate a similarity between the plurality of RSS values of the backscattered signals and the recorded RSS values. As a result, if the similarity is more than a threshold, the AP can be authenticated as a legitimate device, and if the similarity is not more than the threshold, the AP can be authenticated as an illegal device.

A detailed exemplary embodiment can be found below in connection with Figure 8.

In summary, the present disclosure proposes an adaptive multi-stage authentication and attacker tracing solution by exploiting physical layer features of the terminal device's backscattered signals and its positioning information. This solution can support: 1) enhanced authentication based on positioning with RSS values of backscattered signals; 2) attacker detection and tracing.

An exemplary embodiment is further described below in connection with Figures. 7 and 8. Figure 7 illustrates an exemplary procedure for an adaptive multi-stage authentication and attacker tracing according to some embodiments of the present disclosure. Figure 8 is a signaling diagram for the multi-stage mutual authentication procedure. As shown in Figures. 7 and 8, the proposed adaptive multi-stage authentication and attacker tracing solution may contain two parts. The first part is a multi-stage authentication scheme at a network node such an AP for authenticating of terminal devices such as BDs via their ID, RSS values and other appropriate positioning information, which adaptively supports static and mobile scenarios. The second part is an attacker detection and tracing scheme that can determine the number of attackers and trace their positions.

As shown in Figure 7, this optimal scheme may contain three phases:

**Initial phase.** All BDs should register at the AP with their real ID information and location $L_0^r$, and the AP will record the corresponding RSS value $RSS_0$ of each BD. Furthermore, for each BD, the AP can build a position prediction map by collecting all positions of each BD and the corresponding RSS or a position prediction algorithm by collecting trajectory location information over a period of time based on physics-based approaches. This phase is needed when BDs enter the coverage of the AP and join the network for the first time.

**Authentication phase.** The AP will apply a multi-stage authentication to continuously verify the identity of a BD and if the transmission is from a legitimate BD as expectation.

**Attacker detection and tracing phase.** In this phase, when the authentication fails, which means there is at least an attacker, the AP will run detection and tracing to determine the number of attackers and localize their positions.

**Multi-stage physical layer mutual authentication**

The procedure of multi-stage physical layer mutual authentication is described below and shown in Figure 8.

***Step 1.*** At time $t_j$, the AP may predict the location $L_{t_j}$ of the selected BD based on its location trajectory history, and generates a range of transmission signal power according to the predicted location for supporting enough communication rate and efficient power consumption. Then, the AP may transmit a downlink RF signal with a random power $P_{t_j}$ selected from the power range conveying essential information, such as selected BD information and ID request.

***Step 2.*** The BD may backscatter the downlink RF signal, and transmits its ID via modulating the incident downlink RF signal. In some cases, if the BD has the ability to measure the RSS of the downlink RF signal, it may record the RSS value $RSS_{t_j}$ and stores it.

***Step 3.*** In the first stage, the AP may decode the ID information from the backscattered signal and compare it with the stored ID information referring to the selected BD. If not matching, the authentication fails and the BD will be regarded as an illegal device. In the second stage, the AP may record the RSS value $RSS_{t_j}^b$, and the value of the AoA $\alpha_{t_j}$ of the backscattered signal using a smart antenna array while decoding ID information in order to obtain certain desired positioning information. The AP may calculate the location of the BD with $RSS_{t_j}^b$ and $\alpha_{t_j}$. With the calculated location and location history, the AP may determine whether the BD is static or mobile and adaptively adopt the following methods:

a) In the static case, the AP may compare the current calculated location with the registered location to authenticate the BD. This process can be iteratively used to authenticate the BD on each transmission packet. After a certain period of time, AP can choose to conduct a third stage authentication to verify all transmissions. After recording N RSS values

$$\mathcal{D} = \{RSS_{t_j}^b, RSS_{t_{j+1}}^b, \dots, RSS_{t_{j+N}}^b\}$$ within N time slot, the AP may obtain the set

$$\mathcal{D}' = \{P_{t_j} - RSS_{t_j}^b, P_{t_{j+1}} - RSS_{t_{j+1}}^b, \dots, P_{t_{j+N}} - RSS_{t_{j+N}}^b\}$$ . Then, the AP may conduct cluster analysis on the set D' by applying clustering algorithms, such as K-means and Partitioning Around Mediods (PAM) method by partitioning it into two clusters (i.e., $K = 2$). The AP may calculate the distance $D_{t_j}$ between two medoids ($M_1$ and $M_2$) or two average values ($C_1$ and $C_2$) of two clusters, $D_{t_j} = ||M_1 - M_2||$ or $D_{t_j} = ||C_1 - C_2||$. Under normal conditions, the distance $D_{t_j}$ should be small since there is basically only one cluster from a single location. Otherwise, there is more than one device at different locations claiming the same ID information. As a result, the distance $D_{t_j}$ will be large as the clusters are associated with different locations. Thus, the AP may utilize the distance $D_{t_j}$ to validate the BD.

b) In the mobile case, the AP may compare the current calculated location with the predicted location to authenticate the BD. This process can be iteratively used to authenticate the BD on each transmission packet. Likewise, the AP can choose to conduct a third stage authentication to verify all transmissions after a certain period of time. The AP may similarly obtain the RSS set $\mathcal{D}' = \{P_{t_j} - RSS_{t_j}^b, P_{t_{j+1}} - RSS_{t_{j+1}}^b, \dots, P_{t_{j+N}} - RSS_{t_{j+N}}^b\}$ as the RSS trace of the BD. Then, the AP may exploit a trace partitioning approach and reconstruction technique to construct two RSS trace vectors, $V_1$ and $V_2$. Instead of calculating the absolute difference of two vectors, the AP may measure their similarity via the correlation coefficient r as follows:

$$r = \frac{\sum_{i=1}^{n}(v_1 - \bar{v}_1)(v_2 - \bar{v}_2)}{(n-1)\delta_1\delta_2}$$

where $v_1 \in V_1$, $v_2 \in V_2$, $\bar{v}_1$ and $\bar{v}_2$ are the means of $V_1$ and $V_2$, $\delta_1$ and $\delta_2$ are the standard deviations of $V_1$ and $V_2$, respectively, and $0 \le |r| \le 1$. Only $|r|$ near 1 may indicate $V_1$ and $V_2$ trend to change together with high positive linearity, which means they are from the same BD.

*Step 4.* (optional) The AP can require the BD to feedback $M$ RSS records measured by the BD over a past certain period of time, $\mathcal{C} = \{RSS_{t_j}, RSS_{t_{j-1}}, \ldots, RSS_{t_{j-M}}\}$. Then, instead of applying the methods in the third stage above, the AP can validate the BD by comparing the feedback RSS list with its own recorded RSS list

$$\mathcal{C}^b = \{RSS^b_{t_j}, RSS^b_{t_{j-1}}, \ldots, RSS^b_{t_{j-M}}\}$$

as a replacement.

*Step 5.* (optional) The BD may select $M$ RSS records to form an RSS list $\mathcal{C}$ and send it back to the AP.

*Step 6.* (optional) After receiving $\mathcal{C}$, the AP may first compare the length of $\mathcal{C}$ and the length of the recorded list $\mathcal{C}^b$. If they are not equal, the AP may directly output an authentication failure. This is because the length of $\mathcal{S}^b$ is larger than the length of $\mathcal{S}$, when some transmissions are from attackers which impersonate the legitimate BD. Otherwise, the AP may then construct two corresponding vectors as follows:

$$\mathcal{C}_{BD} = \{2(P_{t_j} - RSS_{t_j}), 2(P_{t_{j-1}} - RSS_{t_{j-1}}), \ldots, 2(P_{t_{j-M}} - RSS_{t_{j-M}})\} = \{\mathcal{C}_{t_j}, \mathcal{C}_{t_{j-1}}, \ldots, \mathcal{C}_{t_{j-M}}\}$$

$$\mathcal{C}_{AP} = \{P_{t_j} - RSS^b_{t_j}, P_{t_{j-1}} - RSS^b_{t_{j-1}}, \ldots, P_{t_{j-M}} - RSS^b_{t_{j-M}}\} = \{\mathcal{C}^b_{t_j}, \mathcal{C}^b_{t_{j-1}}, \ldots, \mathcal{C}^b_{t_{j-M}}\}$$

Because the wireless channel between the AP and the selected BD is reciprocal and the downlink channel from the AP to the BD and the uplink channel from the BD to the AP are identical within the coherence time, i.e., $2(P_{t_j} - RSS_{t_j}) = P_{t_j} - RSS^b_{t_j}$. If there is an attacker that sends fake messages to the AP by impersonating the legitimate BD, the attacking channel from the attacker to the AP is uncorrelated with the uplink channel. This is because the well-known Jakes model states that there is a rapid decorrelation in the wireless channel over a distance of approximately half a wavelength, and it may assume an independent channel for a distance of one wavelength or more. Thus, the AP can measure the correlation coefficient $\rho_{AP}$ of the two above calculated RSS vectors. If the correlation coefficient is larger than some threshold, it will consider the BD is the legitimate BD. Otherwise, it will output an authentication failure. The intuition behind is if there is no attack, the RSS vectors of the BD and AP should be highly correlated according to the reciprocity of wireless channel and the identical of the downlink channel and the uplink channel. If there is an attacker, the RSS vector of the AP is a mixture of the RSS value of the legitimate BD and the RSS value of the attacker, which will degrade their correlation.

*Step 7.* (optional). Likewise, the BD can request the AP to transmit its recorded RSS list and compare the length of AP's RSS list and its own RSS list. If they are equal, the BD may perform the following process. In case the BD may not know the transmission power $P_{t_j}$, the AP may transmit the vector

$$\mathcal{C}'_{AP} = \{P_{t_j} + RSS^b_{t_j}, P_{t_j} + RSS^b_{t_{j+1}}, \ldots, P_{t_{j+M}} + RSS^b_{t_{j+M}}\} = \{\mathcal{C}^b_{t_j}, \mathcal{C}^b_{t_{j+1}}, \ldots, \mathcal{C}^b_{t_{j+M}}\}$$ . And the BD constructs the vector

$$\mathcal{C}'_{AP} = \{P_{t_j} + RSS^b_{t_j}, P_{t_j} + RSS^b_{t_{j+1}}, \ldots, P_{t_{j+M}} + RSS^b_{t_{j+M}}\} = \{\mathcal{C}^b_{t_j},$$

$$\mathcal{C}^b_{t_{j+1}}, \ldots, \mathcal{C}^b_{t_{j+M}}\}.$$

With a similar process to that in Step 6, the BD may measure the correlation coefficient $\rho'_{AP}$ of the two vectors to authenticate the AP for achieving the mutual authentication.

For multiple BDs in the BC system, this multi-stage authentication scheme can also support enhanced and secure authentication on multiple BDs by applying a time-division manner. In each time frame, the AP may select only one BD to communicate, and continuously authenticate this BD during subsequent communications. Thus, the present disclosure can achieve authentication for multiple BDs with high scalability. Furthermore, the present disclosure can be applied in the BC system with multiple APs. When a master AP transmits RF signals to an BD and communicates with it, other APs can also record the RSS value of backscattered signals backscattered from the BD. Then the other APs can estimate the location of the BD with signal power information provided by the master AP that would like the other APs to help it for positioning and authentication. Also, the other APs can conduct the cluster analysis of RSS values in the third stage to monitor the RF signal behavior of the BD, which provides additional authentication and assist achieving highly accurate authentication.

**Attacker detection and tracing**

In the static case, since there could be several attackers, the inaccurate estimation of their number will cause failure in localizing the multiple attackers. As it is known that many attackers will use the same ID of a BD to launch attacks, discovering the attacker amount becomes a multi-class detection problem of the recorded RSS list of the AP. Thus, the AP may utilize clustering algorithms over the D', such as K-means and PAM, to find the number of attackers. Based on the clustering results, the AP may exploit the average RSS value from each cluster to estimate the position of each attacker. Furthermore, if there is only one attacker that is mobile, the AP can also utilize the clustering result to trace the attacker. To this end, the AP may first determine the normal RSS cluster, in which all elements are from the legitimate BD via their relationship with the registered location. Then, the trace of attackers can be constructed based on multiple locations associated with corresponding abnormal RSS clusters. For instance, the RSS set

$$\mathcal{D}' = \{P_{t_j} - RSS_{t_j}^b, P_{t_{j+1}} - RSS_{t_{j+1}}^b, \dots, P_{t_{j+N}} - RSS_{t_{j+N}}^b\} = \{D_1, D_2, \dots, D_N\}$$ is classified into K clus-

ters, $\mathcal{C} = (C_1, C_2, \dots, C_K)$. Let $C_k = \{D_1^k, D_2^k, \dots, D_{num_{C_k}}^k\}$ be the $k$ th cluster, $num_{C_k} = |C_k|$, $1 \le k \le K$,

$\sum_1^K num_{C_k} = N$. The mean of each cluster can be calculated as follows:

$$mean_k = \frac{\sum_{i=1}^{num_{C_k}} D_i^k}{num_{C_k}}.$$

Thus, the AP can calculate the location associated with $mean_k$. In the static case, if attackers are static, the AP can localize K attackers with the calculated abnormal positions. If there is only one mobile attacker, the AP can trace its motion trajectory through $K$ calculated positions.

In the mobile case, since the RSS records from the legitimate BD and the attacker are not highly correlated to each other in general, they can be partitioned into two classes for further determining the number of attackers and their locations. The AP may partition the RSS set $\mathcal{D}' = \{D_1, D_2, \dots, D_N\}$ containing $N$ consecutive RSS records into two classes as

$$\mathcal{C}_x = $$

$$\{D_1^x, D_2^x, \dots, D_{num_x}^x\}$$

and

$$\mathcal{C}_y = \{D_1^y, D_2^y, \dots, D_{num_y}^y\},$$

, corresponding to the RSS records from the legitimate BD and the attackers. The AP may then exploit the conditional probability distributions $p(D|D \in \mathcal{C}_x)$ and $p(D|D \in \mathcal{C}_y)$ to partition the RSS records. Without a prior knowledge about the distribution of the legitimate BD and the attacker, the AP may obtain an optimal threshold by applying the Otsu optimal threshold approach to partition the RSS set D' to $\mathcal{C}_x$ and $\mathcal{C}_y$. The key steps can be described as follows:

- **RSS probability estimation.** The AP may first sort the RSS values in D'. The distinct RSS records are denoted as $D_j$ with $j \in (1,2, ...,J)$, where $J$ is the number of distinctive values in $\mathcal{D}'$. The number of each distinctive RSS $D_j$ is doneted as $n_j$, $\sum_{j=1}^{J} n_j = N$. Then the probability distribution of each value can be calculated as:

$$p(D_j) = \frac{n_j}{N}$$

where $p(D_j) \geq 0$, $\sum_{j=1}^{J} p(D_j) = 1$.

- **Optimal threshold $\tau$ searching.** The AP may search a $\tau$ which leads to the minimization of the inter-class variances as:

$$\underset{\tau}{\text{minimize}} \quad \delta_{\mathcal{C}_x}^2(\tau) \sum_{j=1}^{\tau-1} p(D_j) + \delta_{\mathcal{C}_y}^2(\tau) \sum_{j=\tau}^{N} p(D_j),$$

where

$$\delta_{\mathcal{C}_x}^2(\tau)$$

and

$$\delta_{\mathcal{C}_y}^2(\tau)$$

are the variance of $\mathcal{C}_x$ and $\mathcal{C}_y$, respectively. Based on the optimum threshold $\tau$, the AP can optimally classify the RSS set $\mathcal{D}'$ into two classes as $\mathcal{C}_x$ and $\mathcal{C}_y$, which donate the RSS values are from different BDs with different locations.

With the RSS record class, assuming $\mathcal{C}_y$, the AP can trace the motion trajectory of the attacker by calculating each position associated with each RSS value, like

$$D_j^y \in \mathcal{C}_y.$$

In summary, the present disclosure may have the following advantages:

- Secure and accurate authentication: This invention can utilize different features in each stage with corresponding techniques to authenticate BDs. The design can realize a multi-stage authentication process to achieve secure and accurate authentication in BC systems.
- Lightweight: This invention can provide a lightweight authentication scheme by only exploiting channel-based features instead of complex cryptographic algorithms for example. It only requires BDs to provide the ID in the first stage and RSS records in the third stage for enhancing authentication. Thus, this design can be lightweight for resource-limited BDs with low computation and power consumption.
- Adaptively: This invention can support the AP to self-adjust and select an appropriate authentication method by positioning the BDs and tracing their location trajectory to determine whether a BD is static or mobile.
- Mutual authentication: This invention can achieve mutual authentication in the third stage by exchanging the RSS records between the AP and BDs. The design can be feasible when the BDs have the ability to record RSS values.
- Attacker detection and tracing: This invention can detect the number of attackers and trace their locations in the backscatter systems by employing channel-based features.

- Scalability: This invention can be easily extended to authenticate multiple BDs in a BC system and also can be extended to allow multiple APs to record the RSS values to authenticate a BD. In addition, all APs can cooperate with each other to improve positioning accuracy of the BDs and attackers.
- Security: Except for identity authentication, the AP can prevent wireless signal forge, relay and replay attacks. This is because the AP chooses a random power for each transmission, making attackers unable to obtain the signal transmission power to raise wireless signal attacks.

Reference is now made to Figure 9, which illustrates a simplified block diagram of an apparatus 900 according to some embodiments of the present disclosure. The apparatus may be embodied in a wireless communication system, such as a BC system or a 5G system. The apparatus 900 is operable to carry out the methods as described with reference to Figures 2, 3, 4, 5, and/or 6, and possibly any other processes or methods. It is also to be understood that any one of the above methods are not necessarily carried out completely by the apparatus 900. Some steps of the above methods may be performed by one or more other entities.

The apparatus 900 may comprise at least one processor 901, such as a data processor (DP) and at least one memory (MEM) 902 coupled to the processor 901. The MEM 902 stores a program (PROG) 903. The PROG 903 may include instructions that, when executed on the associated processor 901, enable the apparatus 900 to operate in accordance with the embodiments of the present disclosure, for example to perform the above methods. A combination of the at least one processor 901 and the at least one MEM 902 may form a processing means adapted to implement various embodiments of the present disclosure.

Various embodiments of the present disclosure may be implemented by computer program executable by the processor 901, circuitry, software, firmware, hardware or in a combination thereof. The processors 901 may be of any type suitable to the local technical environment, and may include one or more of general purpose computers, special purpose computers, microprocessors, digital signal processors DSPs and processors based on multicore processor architecture, as non-limiting examples.

The MEMs 902 may be of any type suitable to the local technical environment and may be implemented using any suitable data storage technology, such as semiconductor-based memory devices, magnetic memory devices and systems, optical memory devices and systems, fixed memory and removable memory, as non-limiting examples.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), circuitry, software (one or more modules), or combinations thereof. For a firmware, circuitry, or software, implementation may be made through modules (e.g., procedures, functions, and so on) that perform the functions described herein.

Embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

It will be obvious to those skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. The protection scope of the disclosure is defined by the accompanying claims.

**Claims**

1.  A method implemented by a network node, comprising:

    transmitting (201) a radio frequency signal to a terminal device;
    receiving (203), in response to the radio frequency signal, a backscattered signal from the terminal device, wherein the backscattered signal comprises identification information of the terminal device;
    measuring (205) a received signal strength, RSS, value of the backscattered signal; and
    authenticating (207) the terminal device based on the identification information of the terminal device and the RSS value of the backscattered signal,
    authenticating the terminal device based on the identification information of the terminal device and the RSS value of the backscattered signal comprises:

    obtaining (307) the identification information of the terminal device from the backscattered signal;
    **characterized in**
    comparing (309) the obtained identification information of the terminal device with registered identification information of the terminal device in the network node;
    authenticating, in response to the obtained identification information of the terminal device not matching the registered identification information of the terminal device, the terminal device as an illegal device,
    authenticating the terminal device based on the identification information of the terminal device and the RSS value of the backscattered signal further comprises:

    estimating (311), in response to the obtained identification information of the terminal device matching the registered identification information of the terminal device, a current location of the terminal device based on the RSS value and an angle of arrival, AOA, value of the backscattered signal;
    comparing (313, 315) the current location of the terminal device with predetermined location information of the terminal device;
    authenticating, in response to the current location of the terminal device not matching the predetermined location information of the terminal device, the terminal device as an illegal device; and
    authenticating, in response to the current location of the terminal device matching the predetermined location information of the terminal device, the terminal device as a legitimate device.

2.  The method according to claim 1, wherein the terminal device is a static device, and the predetermined location information is a registered location of the terminal device in the network node.

3.  The method according to claim 1, wherein the terminal device is a mobile device, and the predetermined location information is a predicted location of the terminal device predicted by the network node.

4.  The method according to any one of claims 1 to 3, further comprising:
    recording (401) the RSS value of the backscattered signal.

5.  The method according to claim 4, wherein authenticating the terminal device based on the identification information of the terminal device and the RSS value of the backscattered signal further comprises:

    obtaining a set of power differences based on RSS values of backscattered signals recorded over a period of time and transmission powers of corresponding radio frequency signals;
    clustering the set of power differences into two clusters;
    calculating a distance between the two clusters; and
    authenticating, in response to the distance being less than a first threshold, the terminal device as a legitimate device; and/or
    authenticating, in response to the distance being not less than the first threshold, the terminal device as an illegal device.

6.  The method according to any one of claims 1 to 5, wherein the radio frequency signal is transmitted with a transmission power randomly selected from a range of transmission powers associated with the terminal device.

7. The method according to any one of claims 4 to 6, further comprising:

   obtaining an RSS set based on recorded RSS values of backscattered signals and transmission powers of corresponding radio frequency signals; and
   transmitting, in response to a request from the terminal device, the RSS set to the terminal device.

8. The method according to any one of claims 1 to 7, further comprising:

   predicting, with a trajectory prediction module, a target network node into whose coverage the terminal device will move; and
   sending location prediction related information, the RSS value of the backscattered signal and the estimated location of the terminal device to the target network node.

9. An apparatus, comprising:

   at least one processor (901); and
   at least one memory (902) including computer executable instructions (903);
   the at least one memory (902) and the computer executable instructions (903) configured to, when executed by the at least one processor (901), cause the apparatus to perform the method according to any of claims 1-8.

10. A method implemented by a terminal device, comprising:

    receiving (601), from a network node, a radio frequency signal;
    transmitting (603), in response to the radio frequency signal, a backscattered signal to the network node, wherein the backscattered signal comprises identification information of the terminal device;
    **characterized in** measuring and recording (605) a received signal strength, RSS, value of the radio frequency signal;
    transmitting (607) a request to the network node for a RSS set obtained based on a plurality of RSS values of backscattered signals measured over a period of time and transmission powers of corresponding radio frequency signals;
    receiving (609) the RSS set from the network node; and
    authenticating (611) the network node based on recorded RSS values of the radio frequency signals over the same period of time and the RSS set.

11. The method according to claim 10, wherein authenticating the network node based on recorded RSS values of the radio frequency signals over the same period of time and the RSS set comprises:

    calculating a similarity between the plurality of RSS values of the backscattered signals and the recorded RSS values of the radio frequency signals over the same period of time;
    authenticating, in response to the similarity being more than a threshold, the network node as a legitimate device; and/or
    authenticating, in response to the similarity being not more than the threshold, the network node as an illegal device.

12. The method according to claim 10, wherein authenticating the network node based on the recorded RSS values of the radio frequency signals over the same period of time and the RSS set further comprises:

    comparing an amount of the plurality of RSS values of the backscattered signals with an amount of recorded RSS values of the radio frequency signals corresponding to the backscattered signals over the same period of time; and
    authenticating, in response to the amount of the plurality of RSS values of the backscattered signals being not equal to the amount of the recorded RSS values, the network node as an illegal device; and/or
    in response to the amount of the plurality of RSS values of the backscattered signals being equal to the amount of the recorded RSS values,

       calculating a similarity between the plurality of RSS values of the backscattered signals and the recorded RSS values;
authenticating, in response to the similarity being more than a threshold, the network node as a legitimate device; and/or
authenticating, in response to the similarity being not more than the threshold, the network node as an illegal device.

13. The method according to claim 10 or 11, further comprising:
transmitting, in response to a request from the network node, the recorded RSS values of the radio frequency signals to the network node.

14. An apparatus, comprising:

at least one processor (901); and
at least one memory (902) including computer executable instructions (903);
the at least one memory (902) and the computer executable instructions (903) configured to, when executed by the at least one processor (901), cause the apparatus to perform the method according to any of claims 10-13.

15. A computer readable storage medium storing thereon computer executable instructions which, when executed by a computer, cause the computer to perform the method according to any of claims 1-8 and 10-13.

**Patentansprüche**

1. Verfahren, implementiert durch einen Netzwerkknoten, umfassend:

Übertragen (201) eines Hochfrequenzsignals an ein Endgerät;
Empfangen (203), als Reaktion auf das Hochfrequenzsignal, eines rückgestreuten Signals von dem Endgerät, wobei das rückgestreute Signal Identifikationsinformationen des Endgeräts umfasst;
Messen (205) eines Werts der empfangenen Signalstärke, RSS, des rückgestreuten Signals; und
Authentifizieren (207) des Endgeräts basierend auf den Identifikationsinformationen des Endgeräts und dem RSS-Wert des rückgestreuten Signals,
wobei das Authentifizieren des Endgeräts basierend auf den Identifikationsinformationen des Endgeräts und dem RSS-Wert des rückgestreuten Signals Folgendes umfasst:

Ermitteln (307) der Identifikationsinformationen des Endgeräts aus dem rückgestreuten Signal;
**dadurch gekennzeichnet, dass** Vergleichen (309) der ermittelten Identifikationsinformationen des Endgeräts mit registrierten Identifikationsinformationen des Endgeräts in dem Netzwerkknoten;
Authentifizieren, wenn die ermittelten Identifikationsinformationen des Endgeräts nicht mit den registrierten Identifikationsinformationen des Endgeräts übereinstimmen, des Endgeräts als illegales Gerät,
wobei das Authentifizieren des Endgeräts basierend auf den Identifikationsinformationen des Endgeräts und dem RSS-Wert des rückgestreuten Signals ferner Folgendes umfasst:

Schätzen (311), wenn die ermittelten Identifikationsinformationen des Endgeräts mit den registrierten Identifikationsinformationen des Endgeräts übereinstimmen, eines aktuellen Standorts des Endgeräts basierend auf dem RSS-Wert und einem Ankunftswinkel-, AOA-Wert des rückgestreuten Signals;
Vergleichen (313, 315) des aktuellen Standorts des Endgeräts mit vorbestimmten Standortinformationen des Endgeräts;
Authentifizieren, wenn der aktuelle Standort des Endgeräts nicht mit den vorbestimmten Standortinformationen des Endgeräts übereinstimmt, des Endgeräts als illegales Gerät; und
Authentifizieren, wenn der aktuelle Standort des Endgeräts mit den vorbestimmten Standortinformationen des Endgeräts übereinstimmt, des Endgeräts als legitimes Gerät.

2. Verfahren nach Anspruch 1, wobei das Endgerät ein statisches Gerät ist und die vorbestimmten Standortinformationen ein registrierter Standort des Endgeräts in dem Netzwerkknoten sind.

3. Verfahren nach Anspruch 1, wobei das Endgerät ein mobiles Gerät ist und die vorbestimmten Standortinformationen ein vorhergesagter Standort des Endgeräts sind, der durch den Netzwerkknoten vorhergesagt wird.

4. Verfahren nach einem der Ansprüche 1 bis 3, ferner umfassend:
Aufzeichnen (401) des RSS-Werts des rückgestreuten Signals.

5. Verfahren nach Anspruch 4, wobei das Authentifizieren des Endgeräts basierend auf den Identifikationsinformationen des Endgeräts und dem RSS-Wert des rückgestreuten Signals ferner Folgendes umfasst:

Ermitteln einer Menge von Leistungsdifferenzen basierend auf RSS-Werten von rückgestreuten Signalen, die über einen Zeitraum aufgezeichnet wurden, und Sendeleistungen der entsprechenden Hochfrequenzsignale;
Clustern der Menge von Leistungsdifferenzen in zwei Cluster;
Berechnen eines Abstands zwischen den zwei Clustern; und
Authentifizieren, wenn der Abstand kleiner als ein erster Schwellenwert ist, des Endgeräts als legitimes Gerät; und/oder
Authentifizieren, wenn der Abstand nicht kleiner als der erste Schwellenwert ist, des Endgeräts als illegales Gerät.

6. Verfahren nach einem der Ansprüche 1 bis 5, wobei das Hochfrequenzsignal mit einer Sendeleistung übertragen wird, die zufällig aus einem Bereich von Sendeleistungen ausgewählt wird, der dem Endgerät zugeordnet ist.

7. Verfahren nach einem der Ansprüche 4 bis 6, ferner umfassend:

Ermitteln eines RSS-Satzes basierend auf aufgezeichneten RSS-Werten von rückgestreuten Signalen und Sendeleistungen der entsprechenden Hochfrequenzsignale; und
Übertragen, als Reaktion auf eine Anforderung des Endgeräts, des RSS-Satzes an das Endgerät.

8. Verfahren nach einem der Ansprüche 1 bis 7, ferner umfassend:

Vorhersagen, mit einem Trajektorienvorhersagemodul, eines Ziel-Netzwerkknotens, in dessen Abdeckungsbereich sich das Endgerät bewegen wird; und
Senden von standortvorhersagebezogenen Informationen, des RSS-Werts des rückgestreuten Signals und des geschätzten Standorts des Endgeräts an den Ziel-Netzwerkknoten.

9. Vorrichtung, umfassend:

mindestens einen Prozessor (901); und
mindestens einen Speicher (902), der ausführbare Computeranweisungen (903) enthält;
wobei der mindestens eine Speicher (902) und die ausführbaren Computeranweisungen (903) dazu konfiguriert sind, bei Ausführung durch den mindestens einen Prozessor (901) die Vorrichtung zu veranlassen, das Verfahren nach einem der Ansprüche 1 bis 8 durchzuführen.

10. Verfahren, implementiert durch ein Endgerät, umfassend:

Empfangen (601), von einem Netzwerkknoten, eines Hochfrequenzsignals;
Übertragen (603), als Reaktion auf das Hochfrequenzsignal, eines rückgestreuten Signals an den Netzwerkknoten, wobei das rückgestreute Signal Identifikationsinformationen des Endgeräts umfasst;
**dadurch gekennzeichnet, dass**
Messen und Aufzeichnen (605) eines Werts der empfangenen Signalstärke, RSS, des Hochfrequenzsignals;
Übertragen (607) einer Anforderung an den Netzwerkknoten für einen RSS-Satz, der basierend auf einer Vielzahl von RSS-Werten von rückgestreuten Signalen, die über einen Zeitraum gemessen wurden, und Sendeleistungen der entsprechenden Hochfrequenzsignale ermittelt wird;
Empfangen (609) des RSS-Satzes von dem Netzwerkknoten; und
Authentifizieren (611) des Netzwerkknotens basierend auf den aufgezeichneten RSS-Werten der Hochfrequenzsignale über denselben Zeitraum und dem RSS-Satz.

11. Verfahren nach Anspruch 10, wobei das Authentifizieren des Netzwerkknotens basierend auf den aufgezeichneten RSS-Werten der Hochfrequenzsignale über denselben Zeitraum und dem RSS-Satz Folgendes umfasst:

Berechnen einer Ähnlichkeit zwischen der Vielzahl von RSS-Werten der rückgestreuten Signale und den aufgezeichneten RSS-Werten der Hochfrequenzsignale über denselben Zeitraum;

Authentifizieren, wenn die Ähnlichkeit größer als ein Schwellenwert ist, des Netzwerkknotens als legitimes Gerät; und/oder
Authentifizieren, wenn die Ähnlichkeit nicht größer als der Schwellenwert ist, des Netzwerkknotens als illegales Gerät.

12. Verfahren nach Anspruch 10, wobei das Authentifizieren des Netzwerkknotens basierend auf den aufgezeichneten RSS-Werten der Hochfrequenzsignale über denselben Zeitraum und dem RSS-Satz ferner Folgendes umfasst:

Vergleichen einer Anzahl der Vielzahl von RSS-Werten der rückgestreuten Signale mit einer Anzahl von aufgezeichneten RSS-Werten der Hochfrequenzsignale, die den rückgestreuten Signalen über denselben Zeitraum entsprechen; und
Authentifizieren, wenn die Anzahl der Vielzahl von RSS-Werten der rückgestreuten Signale nicht gleich der Anzahl der aufgezeichneten RSS-Werte ist, des Netzwerkknotens als illegales Gerät; und/oder
wenn die Anzahl der Vielzahl von RSS-Werten der rückgestreuten Signale gleich der Anzahl der aufgezeichneten RSS-Werte ist,
Berechnen einer Ähnlichkeit zwischen der Vielzahl von RSS-Werten der rückgestreuten Signale und den aufgezeichneten RSS-Werten;
Authentifizieren, wenn die Ähnlichkeit größer als ein Schwellenwert ist, des Netzwerkknotens als legitimes Gerät; und/oder
Authentifizieren, wenn die Ähnlichkeit nicht größer als der Schwellenwert ist, des Netzwerkknotens als illegales Gerät.

13. Verfahren nach Anspruch 10 oder 11, ferner umfassend:
Übertragen, als Reaktion auf eine Anforderung des Netzwerkknotens, der aufgezeichneten RSS-Werte der Hochfrequenzsignale an den Netzwerkknoten.

14. Vorrichtung, umfassend:

mindestens einen Prozessor (901); und
mindestens einen Speicher (902), der ausführbare Computeranweisungen (903) enthält;
wobei der mindestens eine Speicher (902) und die ausführbaren Computeranweisungen (903) dazu konfiguriert sind, bei Ausführung durch den mindestens einen Prozessor (901) die Vorrichtung zu veranlassen, das Verfahren nach einem der Ansprüche 10 bis 13 durchzuführen.

15. Computerlesbares Speichermedium, das darauf gespeicherte ausführbare Computeranweisungen aufweist, die bei Ausführung durch einen Computer den Computer veranlassen, das Verfahren nach einem der Ansprüche 1 bis 8 und 10 bis 13 durchzuführen.

**Revendications**

1. Procédé mis en œuvre par un nœud de réseau, comprenant :

l'émission (201) d'un signal de fréquence radio vers un dispositif terminal ;
la réception (203), en réponse au signal de fréquence radio, d'un signal rétrodiffusé provenant du dispositif terminal, dans lequel le signal rétrodiffusé comprend des informations d'identification du dispositif terminal ;
la mesure (205) d'une valeur de puissance de signal reçu, RSS, du signal rétrodiffusé ; et
l'authentification (207) du dispositif terminal sur la base des informations d'identification du dispositif terminal et de la valeur RSS du signal rétrodiffusé,
l'authentification du dispositif terminal sur la base des informations d'identification du dispositif terminal et de la valeur RSS du signal rétrodiffusé comprenant :

l'obtention (307) des informations d'identification du dispositif terminal à partir du signal rétrodiffusé ;
**caractérisé en ce que** la comparaison (309) des informations d'identification obtenues du dispositif terminal avec les informations d'identification enregistrées du dispositif terminal dans le nœud de réseau ;
l'authentification, en réponse à la non-correspondance des informations d'identification obtenues du dispositif terminal avec les informations d'identification enregistrées du dispositif terminal, du dispositif terminal en tant que dispositif illégal,

l'authentification du dispositif terminal sur la base des informations d'identification du dispositif terminal et de la valeur RSS du signal rétrodiffusé comprenant en outre :

l'estimation (311), en réponse à la correspondance des informations d'identification obtenues du dispositif terminal avec les informations d'identification enregistrées du dispositif terminal, d'un emplacement actuel du dispositif terminal sur la base de la valeur RSS et d'une valeur d'angle d'arrivée, AOA, du signal rétrodiffusé ;

la comparaison (313, 315) de l'emplacement actuel du dispositif terminal avec des informations d'emplacement prédéterminées du dispositif terminal ;

l'authentification, en réponse à la non-correspondance de l'emplacement actuel du dispositif terminal avec les informations d'emplacement prédéterminées du dispositif terminal, du dispositif terminal en tant que dispositif illégal ; et

l'authentification, en réponse à la correspondance de l'emplacement actuel du dispositif terminal avec les informations d'emplacement prédéterminées du dispositif terminal, du dispositif terminal en tant que dispositif légitime.

2. Procédé selon la revendication 1, dans lequel le dispositif terminal est un dispositif statique, et les informations d'emplacement prédéterminées sont un emplacement enregistré du dispositif terminal dans le nœud de réseau.

3. Procédé selon la revendication 1, dans lequel le dispositif terminal est un dispositif mobile, et les informations d'emplacement prédéterminées sont un emplacement prédit du dispositif terminal prédit par le nœud de réseau.

4. Procédé selon l'une quelconque des revendications 1 à 3, comprenant en outre :
l'enregistrement (401) de la valeur RSS du signal rétrodiffusé.

5. Procédé selon la revendication 4, dans lequel l'authentification du dispositif terminal sur la base des informations d'identification du dispositif terminal et de la valeur RSS du signal rétrodiffusé comprend en outre :

l'obtention d'un ensemble de différences de puissance sur la base des valeurs RSS de signaux rétrodiffusés enregistrés sur une période de temps et des puissances d'émission des signaux de fréquence radio correspondants ;

le regroupement de l'ensemble de différences de puissance en deux groupes ;

le calcul d'une distance entre les deux groupes ; et

l'authentification, en réponse à la distance étant inférieure à un premier seuil, du dispositif terminal en tant que dispositif légitime ; et/ou

l'authentification, en réponse à la distance n'étant pas inférieure au premier seuil, du dispositif terminal en tant que dispositif illégal.

6. Procédé selon l'une quelconque des revendications 1 à 5, dans lequel le signal de fréquence radio est émis avec une puissance d'émission sélectionnée aléatoirement parmi une plage de puissances d'émission associées au dispositif terminal.

7. Procédé selon l'une quelconque des revendications 4 à 6, comprenant en outre :

l'obtention d'un ensemble RSS sur la base des valeurs RSS enregistrées de signaux rétrodiffusés et des puissances d'émission des signaux de fréquence radio correspondants ; et

l'émission, en réponse à une requête du dispositif terminal, de l'ensemble RSS vers le dispositif terminal.

8. Procédé selon l'une quelconque des revendications 1 à 7, comprenant en outre :

la prédiction, avec un module de prédiction de trajectoire, d'un nœud de réseau cible dans la couverture duquel le dispositif terminal va se déplacer ; et

l'envoi d'informations relatives à la prédiction d'emplacement, de la valeur RSS du signal rétrodiffusé et de l'emplacement estimé du dispositif terminal vers le nœud de réseau cible.

9. Appareil, comprenant :

au moins un processeur (901) ; et

au moins une mémoire (902) comprenant des instructions exécutables par ordinateur (903) ;

la au moins une mémoire (902) et les instructions exécutables par ordinateur (903) configurées pour, lors de leur exécution par le au moins un processeur (901), amener l'appareil à exécuter le procédé selon l'une quelconque des revendications 1 à 8.

10. Procédé mis en œuvre par un dispositif terminal, comprenant :

la réception (601), d'un nœud de réseau, d'un signal de fréquence radio ;

l'émission (603), en réponse au signal de fréquence radio, d'un signal rétrodiffusé vers le nœud de réseau, dans lequel le signal rétrodiffusé comprend des informations d'identification du dispositif terminal ;

**caractérisé en ce que**

la mesure et l'enregistrement (605) d'une valeur de puissance de signal reçu, RSS, du signal de fréquence radio ;

l'émission (607) d'une requête au nœud de réseau pour un ensemble RSS obtenu sur la base d'une pluralité de valeurs RSS de signaux rétrodiffusés mesurés sur une période de temps et des puissances d'émission des signaux de fréquence radio correspondants ;

la réception (609) de l'ensemble RSS provenant du nœud de réseau ; et

l'authentification (611) du nœud de réseau sur la base des valeurs RSS enregistrées des signaux de fréquence radio sur la même période de temps et de l'ensemble RSS.

11. Procédé selon la revendication 10, dans lequel l'authentification du nœud de réseau sur la base des valeurs RSS enregistrées des signaux de fréquence radio sur la même période de temps et de l'ensemble RSS comprend :

le calcul d'une similarité entre la pluralité de valeurs RSS des signaux rétrodiffusés et les valeurs RSS enregistrées des signaux de fréquence radio sur la même période de temps ;

l'authentification, en réponse à la similarité étant supérieure à un seuil, du nœud de réseau en tant que dispositif légitime ; et/ou

l'authentification, en réponse à la similarité n'étant pas supérieure au seuil, du nœud de réseau en tant que dispositif illégal.

12. Procédé selon la revendication 10, dans lequel l'authentification du nœud de réseau sur la base des valeurs RSS enregistrées des signaux de fréquence radio sur la même période de temps et de l'ensemble RSS comprend en outre :

la comparaison d'une quantité de la pluralité de valeurs RSS des signaux rétrodiffusés avec une quantité de valeurs RSS enregistrées des signaux de fréquence radio correspondant aux signaux rétrodiffusés sur la même période de temps ; et

l'authentification, en réponse à la quantité de la pluralité de valeurs RSS des signaux rétrodiffusés n'étant pas égale à la quantité de valeurs RSS enregistrées, du nœud de réseau en tant que dispositif illégal ; et/ou

en réponse à la quantité de la pluralité de valeurs RSS des signaux rétrodiffusés étant égale à la quantité de valeurs RSS enregistrées,

le calcul d'une similarité entre la pluralité de valeurs RSS des signaux rétrodiffusés et les valeurs RSS enregistrées ;

l'authentification, en réponse à la similarité étant supérieure à un seuil, du nœud de réseau en tant que dispositif légitime ; et/ou

l'authentification, en réponse à la similarité n'étant pas supérieure au seuil, du nœud de réseau en tant que dispositif illégal.

13. Procédé selon la revendication 10 ou 11, comprenant en outre :

l'émission, en réponse à une requête du nœud de réseau, des valeurs RSS enregistrées des signaux de fréquence radio vers le nœud de réseau.

14. Appareil, comprenant :

au moins un processeur (901) ; et

au moins une mémoire (902) comprenant des instructions exécutables par ordinateur (903) ;

la au moins une mémoire (902) et les instructions exécutables par ordinateur (903) configurées pour, lors de leur exécution par le au moins un processeur (901), amener l'appareil à exécuter le procédé selon l'une quelconque des revendications 10 à 13.

15. Support de stockage lisible par ordinateur stockant des instructions exécutables par ordinateur qui, lorsqu'elles sont exécutées par un ordinateur, amènent l'ordinateur à exécuter le procédé selon l'une quelconque des revendications 1 à 8 et 10 à 13.

Figure 1

<u>200</u>

201

Transmit a radio frequency signal to a terminal device

203

Receive, in response to the radio frequency signal, a backscattered signal from a terminal device

205

Measure a RSS value of the backscattered signal

207

Authenticate the terminal device based on the identification information of the terminal device and the RSS value of the backscattered signal

Figure 2

<u>300</u>

301
```
Transmit a radio frequency signal to a terminal device with
a random power
```

303
```
Receive a backscattered signal from a terminal device
```

305
```
Measure a RSS value of the backscattered signal
```

307
```
Obtain an ID of the terminal device from the backscattered
signal
```

309
```
Compare the obtained ID of the terminal device with
registered ID of the terminal device in the network node
```

311
```
Estimate a current location of the terminal device based on
the RSS value and an AOA of the backscattered signal
```

313
```
Compare the current location of the terminal device with a
registered location of the terminal device
```

315
```
Compare the current location of the terminal device with a
predicted location of the terminal device
```

Figure 3

400

401

Record the RSS value of the backscattered signal

403

Obtain a set of power differences based on the RSS values of the backscattered signals recorded over a period of time and transmission powers of the corresponding radio frequency signals

405

Request and receive a plurality of RSS values of the radio frequency signals from the terminal device

407

Perform a clustering analysis on the set of power differences

409

Perform a similarity analysis on the set of power differences

411

Match the received plurality of RSS values with the recorded RSS values

413

Compare an amount of the received plurality of RSS values with an amount of the recorded RSS values

415

Perform a similarity analysis

Figure 4

<u>500</u>

501

Record the RSS value of the backscattered signal

503

Obtain a set of power differences based on the RSS values of the backscattered signals recorded over a period of time and transmission powers of the corresponding radio frequency signals

505

1) Cluster the set of power differences into at least two clusters;
2) Calculate, for each of the at least two clusters, a mean value;
3) Calculate a respective location based on each of the mean values;
4) Compare each of the calculated locations with the registered location of the terminal device;
5) determine abnormal clusters;
6) Localize attackers or obtain a motion trajectory.

507

1) Partition the set of power differences into two RSS classes;
2) Calculate, for each of the at least two clusters, a mean value;
3) Calculate a respective location based on each of the mean values;
4) Compare each of the calculated locations with the registered location of the terminal device;
5) determine the abnormal class;
6) Obtain a motion trajectory.

Figure 5

600

601

Receive, from a network node, a radio frequency signal

603

Transmit, in response to the radio frequency signal, a backscattered signal to the network node

605

Measure and record a RSS value of the radio frequency signal

607

Transmit a request to the network node for a first RSS set obtained based on a plurality of RSS values of the backscattered signals measured over a period of time and transmission powers of the corresponding radio frequency signals

609

Receive the RSS set from network node

611

Authenticate the network node based on the recorded RSS values of the radio frequency signals over the same period of time and the RSS set

Figure 6

700

Figure 7

<u>800</u>

| AP/Server | BDs |

Predict location $L_{t_j}$,
Generate transmission power $P_{t_j}$

Select $BD$, Send signal →

(Optional) record $RSS_{t_j}$

← $ID$

1) Stage 1:
   Match $ID$, success goto 2) otherwise goto 5)
2) Stage 2:
   Record $RSS_{t_j}^b$ and $\alpha_{t_j}$, estimate $L'_{t_j}$, compare $L'_{t_j}$
   with $L_0^r$ or $L_{t_j}$, fail goto 5) otherwise repeat 2) for
   $N$ times and goto 3
3) Stage 3:
   Adaptive apply cluster analysis $\mathcal{D}'$, success
   goto 2) otherwise goto 5)

4) (Optional) Request RSS list of the BD for
   authentication to replace 3) with high security
   level

   Request RSS list →
   extract $\mathcal{C}$

   ← $\mathcal{C}$

   a) Receive $\mathcal{C}$ and extract $\mathcal{C}^b$
   b) Compare their length
   c) Construct $\mathcal{C}_{BD}$ and $\mathcal{C}_{AP}$, calculate $\rho_{AP}$,
      fails goto 5) otherwise send ACK and
      $\mathcal{C}'_{AP}$

   ACK and $\mathcal{C}'_{AP}$ →

   ← ACK

   Receive $\mathcal{C}'_{AP}$ and construct $\mathcal{C}'_{BD}$,
   Calculate $\rho'_{AP}$, if success,
   achieve mutual authentication
   and send ACK, otherwise fails

5) Illegal BD, authentication fails

Figure 8

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019214855 A

- CN 103427993

### Non-patent literature cited in the description

- GenePrint: Generic and Accurate Physical-Layer Identification for UHF RFID Tags. *IEEE/ACM Transactions on Networking*, 2016, vol. 24 (2), 846-858
- Towards replay-resilient RFID authentication. *24th Annual International Conference on Mobile Computing and Networking (MobiCom' 18), New Delhi, India*

- Physical-layer identification of RFID devices. *Proceedings of the 18th conference on USENIX security symposium, Montreal, Canada*, 2009
- **PHYSICAL-LAYER IDENTIFICATION OF UHF RFID TAGS**. *MobiCom'10 Proceedings of the sixteenth annual international conference on Mobile computing and networking, Chicago*, 2010